# EUROPEAN PATENT APPLICATION

(11) **EP 1 039 657 A1**
(43) Date of publication of application: **27.09.2000**
(21) Application number: 99440056.2
(22) Date of filing: 19.03.1999
(51) Int. Cl.: H04B 7/005

(54) **Method for pilot signal power control in a CDMA mobile radio system, as well as base station and mobile station for such a system**

(71) Applicant: ALCATEL, 75008 Paris (FR)
(72) Inventor: Neustadt, Alf, 70199 Stuttgart (DE)
(74) Representative: Brose, Gerhard, Dipl.-Ing.

(57) **Abstract**

In a code division multiple access (CDMA) mobile radio system, transmitted-power control is commonly effected which keeps the transmit level of the generally discontinuously transmitted information signals as low as possible. In addition, a pilot signal is transmitted which is evaluated at the receiving end to estimate the radio channel and correct the distortions caused by the radio channel.

It is proposed to detect the silence periods of the discontinuously transmitted information signal (DAT1) and to reduce the transmitted power of the pilot signal (PLT1) during these silence periods. In this manner, interferences can be reduced and the data signaling rate can be increased without the transmission quality threatening to decrease severely or the communications link threatening to break down.

## Description

This invention relates to a method of radio transmission as set forth in the preamble of claim 1 and to a CDMA mobile radio system for carrying out the method, to a base station for such a system, and to a mobile station for such a system as set forth in the preambles of the respective independent claims.

It is known that radio transmission in a CDMA mobile radio system (CDMA: code division multiple access) is very sensitive to interference from adjacent frequencies or adjacent channels, which may result in a poor carrier-to-interference (C/I) ratio. Therefore, a CDMA transmitter generally incorporates power control which keeps the level of the transmitted information signals as low as possible. In addition, a pilot signal is transmitted which is evaluated at the receiving end to estimate the transfer function of the radio channel and to correct the distortions caused by the channel.

EP-A-795 969 discloses a CDMA mobile radio transmission system in which a pilot signal is transmitted with which at least one information signal is associated. To reduce the interference of the transmitted pilot signal with the information signals, the pilot signal is transmitted with a level which is very low compared with the levels of the information signals. The information signals are transmitted over CDMA radio channels, which form the bearer channels. They are transmitted in the form of so-called bursts, i.e., discontinuously. EP-A-795 969 does not describe by what amount the transmit level of the pilot signal is lower than the transmits levels of the information signals. With this method, however, it is important not to make the transmit level of the pilot signal too small so that the pilot signal can still be detected and decoded at the receiver in order to subsequently permit an estimation of the transfer function of the radio channel. If, on the other hand, the transmit level of the pilot signal is not appreciably lower than the transmit levels of the information signals, no appreciable interference reduction will be obtained.

It is an object of the invention to improve the above-mentioned method so as to ensure both a decodable reception of the pilot signal and significant interference reduction. In addition, a CDMA mobile radio system, a base station, and a mobile station are to be provided which comprise transmitting means for carrying out the method according to the invention.

The object is attained by a method with the features according to claim 1 and by a CDMA mobile radio system, a base station, and a mobile station with the features according to the respective independent claims.

Accordingly, to transmit a pilot signal, it is proposed to detect the silence periods of the discontinuously transmitted information signal and to reduce the transmitted power of the pilot signal during these silence periods.

Thus, the transmit level of the pilot signal during the silence periods is reduced as compared with the transmit level of the pilot signal during the transmission periods. The invention is predicated on recognition that in order to reduce interferences, the power level of the transmitted pilot signal can be further reduced considerably during the silence periods of the information signal without the quality of the radio transmission threatening to decrease severely or the communications link threatening to break down.

Further advantageous features of the invention are defined in the subclaims.

Accordingly, if two or more information signals are transmitted on different bearer channels, it is advantageous to transmit two or more pilot signals on different control channels each having a respective one of the bearer channels associated with it, to detect the silence periods of the respective information signal on each of the bearer channels, and then to reduce the transmitted power of the associated pilot signal exclusively during these silence periods. Thus, for each bearer channel, i.e., for each CDMA radio channel, an associated pilot signal is transmitted whose power depends exclusively on the variation of the level of the information signal transmitted discontinuously on this particular CDMA radio channel. The pilot can thus be optimally adapted to its CDMA radio channel.

Furthermore, if the pilot signal is evaluated at the receiving end for estimating the the CMDA radio channel in the receiver and for effecting power control in the transmitter, the power transmitted in the silence periods is advantageously lowered to a minimum transmit level sufficient to ensure the power control. Tests have shown that at a data rate of, e.g., 384 kb/s, the minimum transmit level on the control channel can be approximately 22 dB lower than the reference level on the CMDA radio channel. Despite this very great reduction, communications contact can be maintained.

A further advantage arises if the pilot signal is evaluated at the receiving end based on a first criterion (e.g., the bit error rate), and if it is evaluated based on a second criterion (e.g., the signal-to-interference ratio) only if a silence period is detected. In this manner, the respective best criterion can be used for each of the two cases, "silence" or "no silence", to ensure optimum power control.

In this connection it is particularly advantageous if the amount by which the transmitted power of the pilot signal is reduced during the silence periods is dependent on the evaluation of the received signal based on the second criterion. This makes it possible to check the minimum transmit level of the pilot signal based on the second criterion, and to change this level if necessary.

It is also advantageous if the amount by which the transmitted power of the pilot signal is reduced is dependent on the demodulation principle used at the receiving end. This measure takes advantage of the recognition that the power control of the pilot can be optimized if the properties of the receiver used (e.g., a so-called Rake receiver) are taken into account.

The invention will now be described in more detail with reference to the accompanying drawings, in which:
- Fig. 1: shows schematically the structure of a mobile radio system in accordance with the invention;
- Fig. 2: shows the time variation of the transmitted power levels of pilot signals and of discontinuously transmitted information signals;
- Fig. 3: is a flowchart for a method of transmitting a pilot signal in accordance with the invention; and
- Fig. 4: shows a schematic diagram of a closed-loop control system for controlling the transmitted power in accordance with the invention.

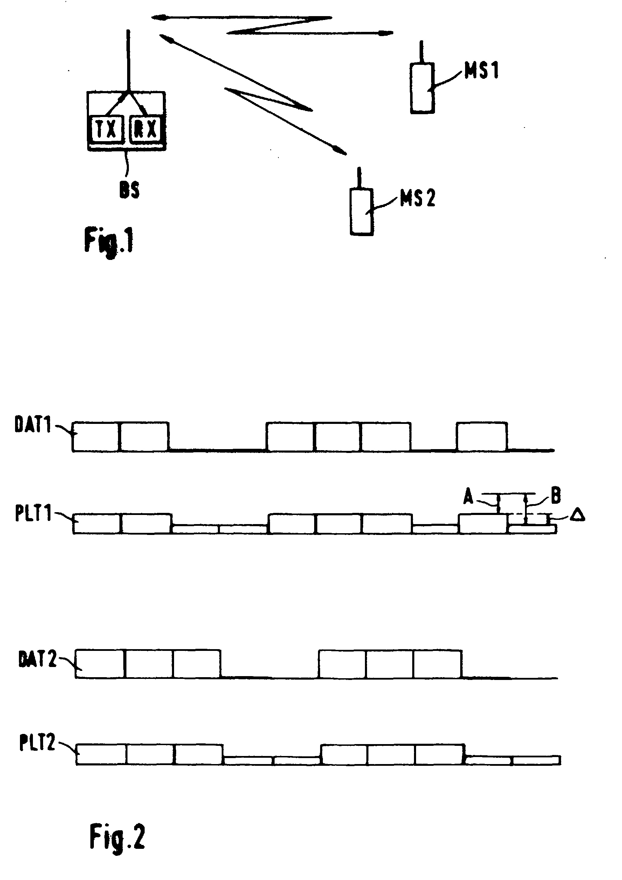

Fig. 1 shows schematically the structure of a CDMA mobile radio system with base stations and mobile stations which exchange radio signals. The CMDA mobile radio system is a cellular system, in which the service area is divided into contiguous cells, each of which has its own base station. Fig. 1 shows, by way of example, only a single base station BS which serves a cell in which two mobile stations MS1 and MS2 are located. Each of the mobile stations MS1 and MS2 is in radio communication with the base station BS. On each radio link, both information signals and pilot signals are exchanged by the CMDA method, which is known per se. CDMA is described, for example, in a book by K. David and T. Benkner entitled "Digitale Mobilfunksysteme", published in 1996 by B. G. Teubner, Stuttgart, Chapter 6.4, pages 259 - 275. The information signals can be speech signals or data signals, particularly packet data signals. For the exchange of the communication and pilot signals, CDMA transmitters and CDMA receivers are provided, of which only the transmitter TX and the receiver RX of the base station BS are shown in Fig. 1. The invention will be described in reference to radio transmission in the forward direction (downlink), i.e., from the base station BS to the mobile station MS1. This does not mean, however, that exclusively the base station BS is equipped with a transmitter operating in accordance with the invention; the mobile stations may also contain such transmitters. The method according to the invention, which is used by the transmitters, will now be described with reference to Figs. 2 to 4.

Fig. 2 shows schematically the time variation of a first information signal DAT1 and a first pilot signal PLT1 as well as the time variation of a second information signal DAT2 and the associated pilot signal PLT2. The information signals DAT1 and DAT2 are packet data signals which are transmitted discontinuously. This means that at times, no packets are transmitted, so that transmission pauses, referred to herein as "silence periods", result. Each data packet comprises 64 data words and is shown schematically in Fig. 2 as a rectangle. The data signal DAT1 is associated with the pilot PLT1, which is transmitted simultaneously with the data signal. The transmit level of the pilot signal PLT1, however, is approximately 3 dB below the transmit level of the data signal DAT1 if data packets are transmitted. During the silence periods, the transmit level of the pilot signal PLT1 is further reduced by about 6 dB. Taking the average transmit level of the data packets as a reference, this means that the level of the pilot PLT1 is reduced by a small amount of A = 3 dB during the transmission periods and by a greater amount of B = 9 dB during the silence periods. The difference D = B - A = 6 dB thus corresponds to the additional reduction of the transmit level during the silence periods. In addition to the data signal DAT1 and the pilot PLT1, the data signal DAT2 and the associated pilot PLT2 are also transmitted using the method described.

The representation of Fig. 2 is to illustrate that the silence periods are evenly distributed over time. Through the reduction of the transmit level of the pilot PLT1 on one radio channel, interference with other radio channels, such as the channel on which the data signals DAT2 are transmitted, is greatly reduced. As investigations have shown, this results in an increase in the data signalling rate in the CDMA mobile radio system by approximately 20%.

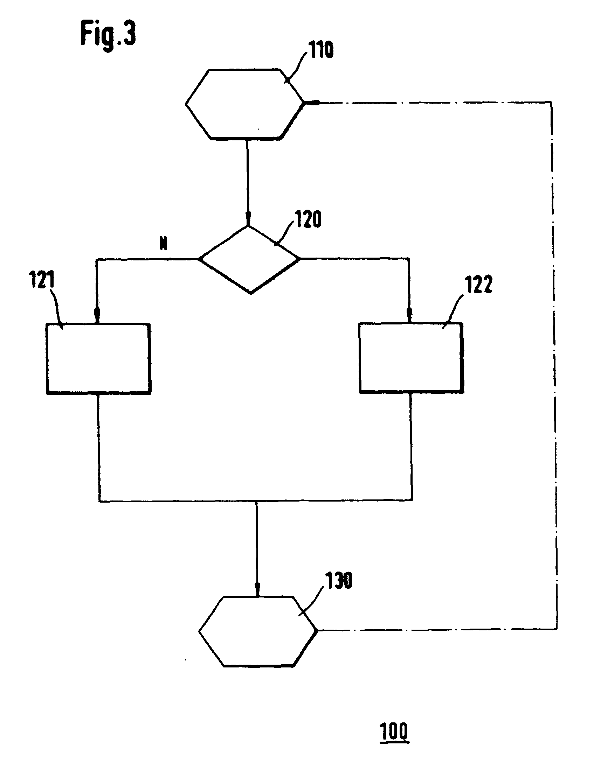

Fig. 3 shows a flowchart for a method for transmitting the pilot signal PLT1 in accordance with the invention. The method 100 comprises steps 110 to 130. In step 110, the process is started, and in the next step 120, it is determined whether a silence period has occurred or not. If no silence period is detected, in a step 121 the transmit level of the pilot PLT1 will be reduced to the level A, which is approximately 3 dB below the level of the data signal DAT1. If a silence period is detected, in a step 122 the pilot PLT1 will be reduced to the lower level B, which is approximately 9 dB below the reference level. This reduction of the transmit level is effected for each frame, i.e., for each data block consisting of several data packets. Parallel with this, power control is effected which sets the transmitted power for each time slot, i.e., for the duration of one data packet. When the transmitted power has been set for a frame, in a step 130 the process is terminated for the time being. For the next frame, the process then continues with step 110.

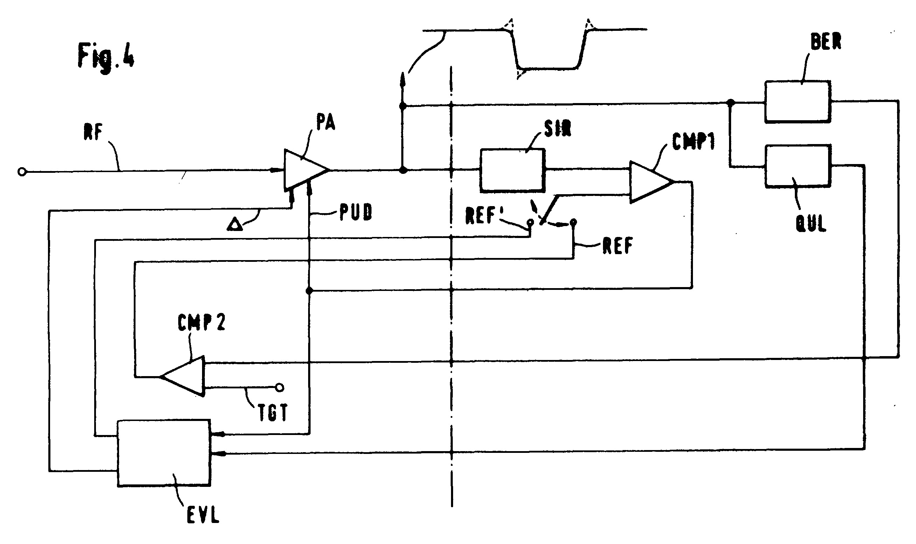

The control of the transmitted power will now be described in more detail with reference to Fig. 4. Fig. 4 shows schematically a closed-loop control system for controlling the radio signal RF, which is generated by the transmitter and radiated via the antenna. The radio signal RF is fed to a power amplifier PA which has two control inputs, and then transferred as an amplified signal to the transmitting antenna. The closed-loop control system of Fig. 4, which carries out the method according to the invention, ensures, among other things, that the level of the transmitted RF signal has no undesired spikes as soon as it is lowered or raised. The curve of the transmit level is much smoother than if conventional power control were used. This is achieved, among other things, by setting the transmit level during the silence periods based on a criterion different from that used during the transmission periods.

First, the operation of the closed-loop control system will be described for the case where a data signal is transmitted. The transmitted signal is evaluated at the receiving end based on a first criterion BER, in this example the bit error rate. The bit error rate measured in the receiver is compared by a first comparator CMP1 with a target value TGT to form a reference signal REF, which, in turn, is compared by a second comparator CMP2 with the signal-to-interference (S/I) ratio SIR, which is also measured in the receiver. The result of this comparison provides a manipulated variable PUD for the power amplifier PA. The manipulated variable PUD indicates whether the gain is to be increased or reduced, and corresponds to a bit value ("1" = "power up", and "0" = "power down"). The S/I ratio is measured time slot by time slot, so that the manipulated variable PUD is calculated for each time slot. The bit error rate BER, however, is determined frame by frame, so that the reference REF is formed only for each frame.

This reference provides the target value to which the S/I ratio is to be set on an average. In other words, the time-slot-wise control based on the evaluation of the S/I ratio determines the short-term transmit level during a time slot, and the long-term evaluation of the bit error rate BER determines that plateau to which the power level is to be set during the respective frame. If data signals are transmitted, the plateau is at the level denoted in Fig. 2 by A.

If a silence period is detected, the power level will be reduced considerably, namely to the level denoted by B. To accomplish this, slow control is effected based on another, second criterion QUL. This criterion is a quality criterion for the pilot transmitted in the silence periods. In this example, an S/I ratio desired for the pilot is used as the criterion QUL. The result of the evaluation of this criterion is the input to a computing process EVL which computes a new reference REF' and the level difference D = B-A, by which the level is to be additionally reduced during the silence periods. A further input to this computing process EVL is the output signal from the second comparator CMP2, which compares the currently measured S/I ratio with the new reference REF'. These measures ensure that at the beginning of a silence period, the transmit level of the pilot is not abruptly reduced, and that no negative spike forms in the transmit-level curve.

The invention has been described in reference to radio signals transmitted from a base station to mobile stations. However, the invention is applicable not only to signals transmitted in the forward direction but also to signals transmitted in the reverse direction (uplink). Accordingly, the invention can also be applied to signals which are transmitted from a mobile station to the base station.

## Claims

1. A method (100) for radio transmission in a CDMA mobile radio system wherein a pilot signal (PLT1) is transmitted with which at least one information signal (DAT1) is associated which is transmitted discontinuously over a CDMA radio channel,
c**haracterized in**
that silence periods, in which the information signal (DAT1) is not transmitted, are detected (120), and that the transmitted power of the pilot signal (PLT1) is reduced (122) during said silence periods.

2. A method as claimed in claim 1, characterized in that two or more information signals (DAT1, DAT2) are transmitted on different CDMA radio channels, that two or more pilot signals (PLT1, PLT2) are transmitted on different control channels each having a respective one of the radio channels associated therewith, that for each of the CDMA radio channels, the silence periods of the information signal (DAT1) transmitted on this radio channel are detected (120), and that the transmitted power of the associated pilot signal (PLT1) is reduced (122) during said silence periods.

3. A method as claimed in claim 1, characterized in that the pilot signal (PLT1) is evaluated (121) at the receiving end for estimating the CDMA radio channel in the receiver and for effecting power control in the transmitter, and that during the silence periods, the transmitted power is lowered (122) to a minimum transmit level (B) sufficient to ensure the power control.

4. A method as claimed in claim 3, characterized in that the pilot signal (PLT1) is evaluated (121) based on a first criterion (BER), and that, if a silence period is detected, the pilot signal (PLT1) is evaluated (122) based on a second criterion (QUL).

5. A method as claimed in claim 4, characterized in that the amount (D) by which the transmitted power of the pilot signal (PLT1) is reduced (122) during the silence periods is dependent on the evaluation of the received signal based on the second criterion (QUL).

6. A method as claimed in claim 1, characterized in that the amount (D) by which the transmitted power of the pilot signal (PLT1) is reduced (122) during the silence periods is dependent on the demodulation principle used at the receiving end.

7. A CDMA mobile radio system with at least one base station (BS) comprising a transmitter (TX) which transmits an information signal (DAT1) discontinuously over a CDMA radio channel to a mobile station (MS1), and which transmits to said mobile station (MS1) a pilot signal (PLT1) with which the information signal (DAT1) is associated,
**characterized in**
that the transmitter (TX) detects silence periods, in which the information signal (DAT1) is not transmitted, and reduces the transmitted power of the pilot signal (PLT1) during said silence periods.

8. A base station (BS) for a CDMA mobile radio system, said base station (BS) comprising a transmitter (TX) which transmits an information signal (DAT1) discontinuously over a CDMA radio channel to a mobile station (MS1), and which transmits to said mobile station (MS1) a pilot signal (PLT1) with which the information signal (DAT1) is associated,
**characterized in**
that the transmitter (TX) detects silence periods, in which the information signal (DAT1) is not transmitted, and reduces the transmitted power of the pilot signal (PLT1) during said silence periods.

9. A mobile station (MS) for a CDMA mobile radio system, said mobile station (MS) comprising a transmitter which transmits an information signal discontinuously over a CDMA radio channel to a base station (BS),
**characterized in**
that the transmitter transmits to the base station a pilot signal with which the information signal is associated, and that the transmitter detects silence periods, in which the information signal is not transmitted, and reduces the transmitted power of the pilot signal during said silence periods.
